# EUROPEAN PATENT SPECIFICATION

(11) **EP 4 013 004 B1**
(45) Date of publication and mention of the grant of the patent: **30.04.2025**
(21) Application number: 20853720.9
(22) Date of filing: 14.08.2020
(51) Int. Cl.: H04L 9/40

(54) **DATA PROCESSING METHOD AND DEVICE**
DATENVERARBEITUNGSVERFAHREN UND -VORRICHTUNG
PROCÉDÉ DE TRAITEMENT DE DONNÉES ET DISPOSITIF

(30) Priority: 19.08.2019 CN 201910766230
(43) Date of publication of application: 15.06.2022
(73) Proprietor: Huawei Technologies Co., Ltd., Longgang District Shenzhen, Guangdong 518129 (CN)
(72) Inventor: LIU, Bingyang, Shenzhen, Guangdong 518129 (CN); JIANG, Weiyu, Shenzhen, Guangdong 518129 (CN); WANG, Chuang, Shenzhen, Guangdong 518129 (CN)
(74) Representative: Thun, Clemens
(86) International application number: PCT/CN2020/109316
(87) International publication number: WO 2021/032016

(56) References cited:
- CN-A- 101 431 516
- CN-A- 102 932 354
- US-B2- 9 686 270
- YAO CHEN ET AL: "Detecting and Preventing IP-spoofed Distributed DoS Attacks", INTERNATIONAL JOURNAL OF NETWORK SECURITY, 1 July 2008 (2008-07-01), pages 70 - 81, XP055941256, Retrieved from the Internet <URL:http://ijns.jalaxy.com.tw/contents/ijns-v7-n1/ijns-2008-v7-n1-p69-80.pdf> [retrieved on 20220712]
- BREMLER-BARR A ET AL: "Spoofing prevention method", INFOCOM 2005. 24TH ANNUAL JOINT CONFERENCE OF THE IEEE COMPUTER AND CO MMUNICATIONS SOCIETIES. PROCEEDINGS IEEE MIAMI, FL, USA 13-17 MARCH 2005, PISCATAWAY, NJ, USA,IEEE, PISCATAWAY, NJ, USA, vol. 1, 13 March 2005 (2005-03-13), pages 536 - 547, XP010829155, ISBN: 978-0-7803-8968-7, DOI: 10.1109/INFCOM.2005.1497921
- DALIA MOHAMED ET AL: "Defense against Distributed denial of service attacks in computer Networks", 1 January 2010 (2010-01-01), pages 1 - 99, XP055941379, Retrieved from the Internet <URL:https://www.researchgate.net/profile/Dalia-Nashat/publication/285493998_Defense_against_Distributed_denial_of_service_attacks_in_computer_Networks/links/565e9f2b08ae1ef92983de93/Defense-against-Distributed-denial-of-service-attacks-in-computer-Networks.pdf> [retrieved on 20220712], DOI: 10.13140/rg.2.1.3426.4404

## Description

### TECHNICAL FIELD

The application relates to the computer field, and in particular, to a data processing method and a device.

### BACKGROUND

A distributed denial of service (DDoS, distributed denial of service) attack is a persistent problem that destroys network availability, mainly including two types of attacks: a DRDoS attack and flooding (flooding). Costs of the DRDoS attack are very low and an attack capability is very strong. Traffic of a single attack may be amplified tens or even hundreds of thousands of times by a public server that functions as a reflector, making the DRDoS attack a common attack method for intruders. Currently, a proportion of DRDoS attack events in DDoS attack events is higher than that of flooding attack events in DDoS attack events.

The DRDoS attack is used as an example. An intruder may use, by using a controlled device controlled by the intruder, an internet protocol (IP, internet protocol) address of a target device as a source IP address, and send a service request with small traffic to a large number of distributedly deployed reflectors, so that each reflector uses the IP address of the target device as a destination IP address to send a data packet with large traffic to the target device. In this way, a large quantity of data packets with large traffic are aggregated to the target device, which occupies resources of the target device and affects services that can be provided by the target device. This forms the distributed reflection denial of service (DRDoS, distributed reflection denial of service) attack.

A conventional anti-DDoS attack solution cannot quickly determine validity of a data packet directed to the target device. As a result, a valid data packet that is not used to attack the target device cannot reach the target device in time or even cannot reach the target device. Therefore, it is desirable to improve the solution to determine validity of a data packet more quickly.

The document Yao Chen et al.: "Detecting and Preventing IP-spoofed Distributed DoS Attacks"; XP055941256 shows different strategies for recognizing spoofed packets.

The document Bremler-Barr A et al.: "Spoofing Prevention Method", XP010829155 shows a method for recognizing spoofed packets.

The document Dalia Mohamed et al.: "Defense against Distributed Denial of Service Attacks in Computer Networks", XP055941379 shows different strategies for recognizing spoofed packets in communication networks.

### SUMMARY

The present invention is defined by the independent claims. Further advantageous developments are shown in the dependent claims.

Embodiments of this application provide a data processing method and a device, to quickly determine validity of a data packet in a network device.

### BRIEF DESCRIPTION OF DRAWINGS

The following briefly describes the accompanying drawings used in describing the embodiments or the conventional technology.
FIG. 1 is a schematic diagram of an application scenario to which an embodiment of this application is applicable;
FIG. 2 is a schematic diagram of a system framework of a DDoS solution in the conventional technology;
FIG. 3 is a schematic diagram of a system framework according to an embodiment of this application;
FIG. 4 is a flowchart of a data processing method applied to a network device according to an embodiment of this application;
FIG. 5 is a schematic diagram of a structure of an IPv4 header;
FIG. 6 is a schematic diagram of a structure of an IPv6 header;
FIG. 7 is a flowchart of a data processing method applied to a first device according to an embodiment of this application;
FIG. 8 is a flowchart of a data processing method applied to a second device according to an embodiment of this application;
FIG. 9 is a schematic diagram of a process in which a first device and a second device exchange a data packet by using a network device according to an embodiment of this application;
FIG. 10 is a schematic diagram of a structure of a network device according to an embodiment of this application;
FIG. 11 is a schematic diagram of a structure of another network device according to an embodiment of this application;
FIG. 12 is a schematic diagram of a structure of a first device according to an embodiment of this application; and
FIG. 13 is a schematic diagram of a structure of a second device according to an embodiment of this application.

### DESCRIPTION OF EMBODIMENTS

The following describes technical solutions in embodiments of this application with reference to accompanying drawings in the embodiments of this application.

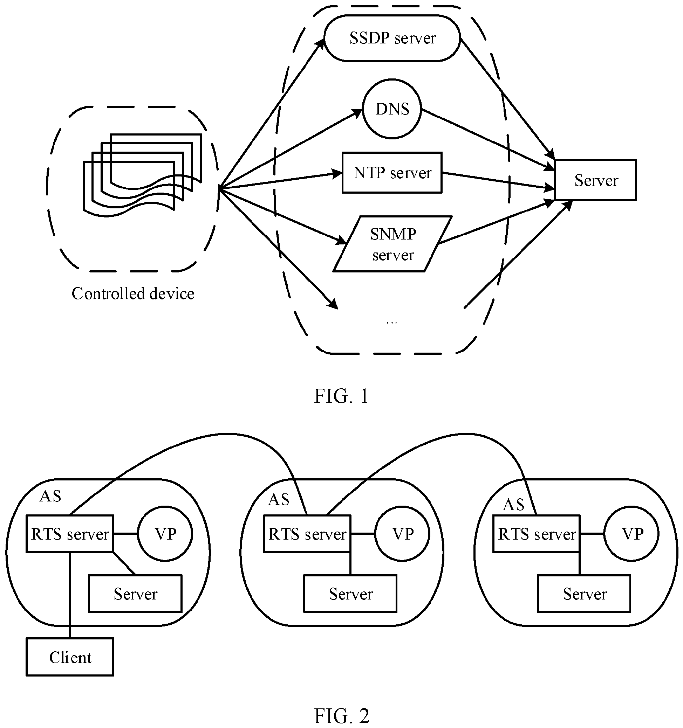

FIG. 1 is a schematic diagram of a service scenario to which an embodiment of this application is applicable. As shown in FIG. 1, a controlled device is a device directly controlled by an intruder. After learning of an IP address of a target device (for example, a server), the intruder may control a plurality of controlled devices to send service requests to a large quantity of distributedly deployed reflectors by using the IP address of the target device as a source IP address. The large quantity of distributedly deployed reflectors include but are not limited to a DNS, an NTP server, an SSDP server, and a simple network management protocol (SNMP, simple network management protocol) server. For example, the reflectors may further include a lightweight directory access protocol (LDAP, lightweight directory access protocol) server. After receiving the service request from the controlled device, each reflector may send, to the target device, a data packet used to attack the target device. In this way, a DDoS attack is formed. However, when the target device is under the DDoS attack, data packets sent by the reflector to the target device may not only include the data packet used to attack the target device, but also include a valid data packet not used to attack the target device, for example, a response data packet sent by the reflector in response to a service request from the target device, and a request data packet actively sent by the reflector and used to request the target device to provide a specific service to the reflector.

In an anti-DDoS attack solution, a specified server may predistribute a token to a client, to distinguish a valid data packet and a data packet used to attack the target device, and valid traffic is sent to the target device. As shown in FIG. 2, each independent autonomous domain (AS) includes an RTS server configured to manage each server included in the AS, each AS further includes a verification node (VP) that cooperates with the RTS server of the AS, and a device that needs to access the server is a client. When the client needs to access one server, the client first needs to access an RTS of an AS to which the server belongs, to obtain a token. A data packet sent by the client to the server needs to carry the obtained token. After the data packet sent by the client to the server reaches the AS to which the server belongs, a VP in the AS in which the server is located may verify the token carried in the data packet. If and only if verification of the token succeeds, for example, when the token carried in the data packet is the same as a token provided by the RTS server of the AS to which the VP belongs for the client, and a quantity of times that the token is used does not exceed a maximum quantity of times, the data packet may be further forwarded to the server. This solution depends on cooperation between a plurality of ASs. RTS servers need to be deployed in all the ASs. A system framework and a border gateway protocol (BGP, border gateway protocol) need to be modified. Therefore, this solution is difficult to be applied to the foregoing service scenario.

In another anti-DDoS attack solution, when the target device is under the DDoS attack, a data packet that needs to be sent to the target device may be introduced into a blackhole route by using a network device, so that traffic that needs to be sent to the target device is no longer forwarded by the network device to a protected device. This solution can ensure that another device that shares a communication link with the target device can provide services properly. However, this causes a case in which a valid data packet that is not used to attack the target device cannot reach the protected device.

In another anti-DDoS attack solution, a traffic cleaning center may be set. When the target device is under the DDoS attack, a data packet that needs to be sent to the target device is forwarded to the traffic cleaning center by using a network device directly connected to the target device. The traffic cleaning center may perform upper-layer protocol parsing, attack feature identification, and corresponding calculation processing on the received data packet, to determine whether the received data packet is valid. A valid data packet is forwarded to the target device, and an invalid data packet is not forwarded to the target device. In this solution, it takes a long time for the traffic cleaning center to determine validity of each data packet, which causes a case in which a valid data packet that is not used to attack the target device cannot reach the target device in time. In addition, the traffic cleaning center depends on a specially deployed hardware device, for example, needs to be deployed on a dedicated DDoS firewall device or another dedicated device. This is costly and difficult to implement.

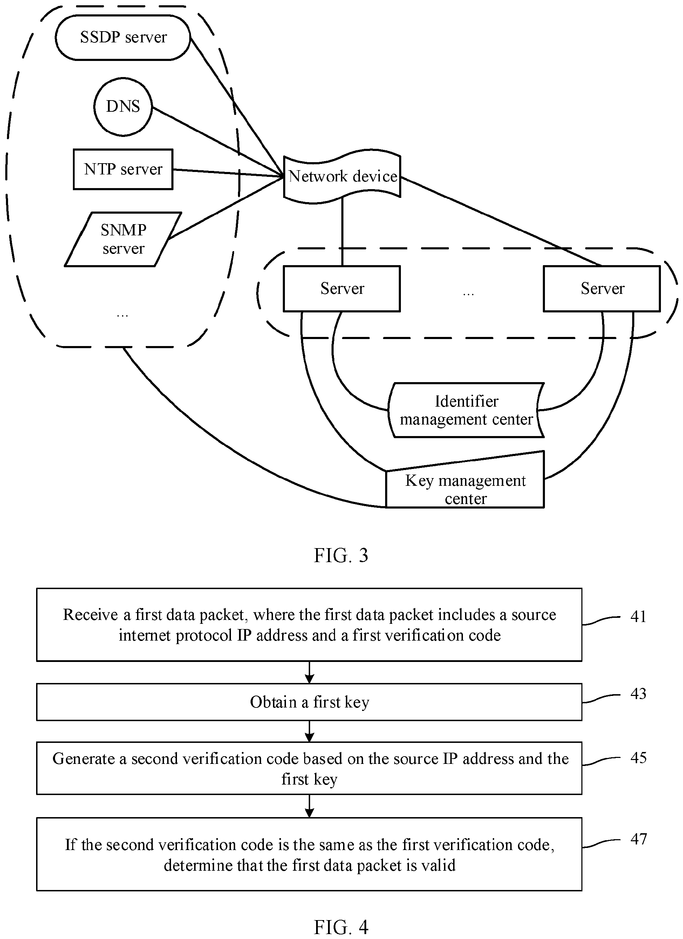

FIG. 3 is a schematic diagram of a system framework according to an embodiment of this application. As shown in FIG. 3, a device that needs to defend against a DDoS attack is usually a server or a personal computer, and each server or personal computer usually does not exist independently, but cooperates with another device. For example, a plurality of servers that need to defend against the DDoS attack may form a server cluster (or is referred to as a security domain, a subnet, an autonomous domain, or a data center) that can provide one or more services. For ease of description, the device that needs to defend against the DDoS attack is referred to as a first device in this embodiment of this application, and the technical solution provided in this embodiment of this application is mainly described by using an example in which the first device is a server. A device that may send, to the first device, a data packet used to attack the first device, to form the DDoS attack on the first device is referred to as a second device. It may be understood that the second device includes but is not limited to various public servers that may be used as a reflector. Usually, each server that forms a server cluster or a LAN may be hosted by a same service provider. Each server in the server cluster may be connected to a same network device, for example, connected to a same border gateway, so that the service provider centrally manages data packets received or sent by each server in the server cluster.

For a plurality of second devices that may send, to the first device, a data packet used to attack the first device, any two second devices usually have different IP addresses. Therefore, different first verification codes may be generated for different second devices by using IP addresses of the second devices, so that data packets exchanged by the different second devices to the first device separately include the different first verification codes. The network device may verify accuracy of a first verification code included in a first data packet from the second device, to determine validity of the data packet from the second device, so as to quickly determine validity of a data packet in the network device. Specifically, the network device located between the first device and the second device may generate a second verification code based on a corresponding first key and a source IP address included in the first data packet received by the network device. If the second verification code is different from the first verification code, it indicates that the second device fails to exchange the data packet with the first device by using the correct first verification code, that is, the first data packet may be a data packet used to attack the first device. On the contrary, if the second verification code is the same as the first verification code, it indicates that the first data packet may be a valid data packet that is not used to attack the first device.

In this embodiment of this application, for each first device, for example, for each server in the server cluster, an identifier may be allocated to the first device by using an identifier management center. For example, specifically, a locator and/or a service identifier are/is allocated. The locator allocated by the identifier management center to one first device may be used at least by the network device to address the first device, for example, used as an IP address or a part of the IP address of the first device, so that the second device and the first device may exchange a data packet by using the network device. For example, the locator may include a network routable prefix, an identifier of a subnet in which the first device is located, and an identifier of the first device in the subnet. A service identifier allocated by the identifier management center to one first device may be used as at least an identifier of a service provided by the first device. It may be understood that,locator any two servers in a same server cluster have different locators. However, a service may require a plurality of different servers to cooperate with each other, and therefore a same service identifier may be allocated to different servers.

It should be noted that a locator and a service identifier of each first device may be further used to implement other service purposes. For details, refer to example description in the following embodiments.

In this embodiment of this application, a first key may be allocated by using a key management center to each first device, for example, for each server in one server cluster. In addition, to improve algorithm security, the key management center may allocate different first keys to different first devices. Alternatively, a second key may be allocated to each first device by using the key management center, and each first device may obtain the first key through derivation calculation based on the second key allocated by the key management center to the first device and another parameter associated with the first device. In addition, prefixes of locators of a plurality of first devices in a same server cluster may be aggregated to allocate a same second key to the plurality of first devices.

The following example describes data processing processes separately performed by the network device, the first device, and the second device when the first device and the second device exchange a data packet by using the network device.

FIG. 4 is a flowchart of a data processing method applied to a network device. As shown in FIG. 4, the method may include at least the following step 41 to step 47. Step 41: Receive a first data packet, where the first data packet includes a source IP address and a first verification code. Step 43: Obtain a first key. Step 45: Generate a second verification code based on the source IP address and the first key. Step 47: If the second verification code is the same as the first verification code, determine that the first data packet is valid.

First, in step 41, the first data packet is received, where the first data packet includes the source IP address and the first verification code.

The first data packet may be a data packet sent by one second device to one first device, and the source IP address included in the first data packet is an IP address of the second device.

The first data packet may be a data packet used to attack the first device, or may be a valid data packet, for example, a response data packet sent by the second device to respond to a second data packet from the first device, and a request data packet used by the second device to request the first device to provide a specific service to the second device.

It should be noted that the first verification code may be generated by the first device, and when generating the first verification code, the first device should use at least the first key and the IP address of the second device. In this way, one first device may separately generate different first verification codes for a plurality of different second devices.

It may be understood that the first data packet is transmitted on a communication link between the first device and the second device, and a network device is a node device on the communication link. Therefore, the first data packet should include at least a network layer protocol header and a transport layer protocol header.

In a possible implementation, the transport layer protocol header of the first data packet includes but is not limited to a TCP header, or may be, for example, a user datagram protocol (UDP, user datagram protocol) header.

In a more specific example, the first verification code may be located in an optional field of the TCP header.

In a possible implementation, the network layer protocol header of the first data packet includes an IPv4 header or an IPv6 header.

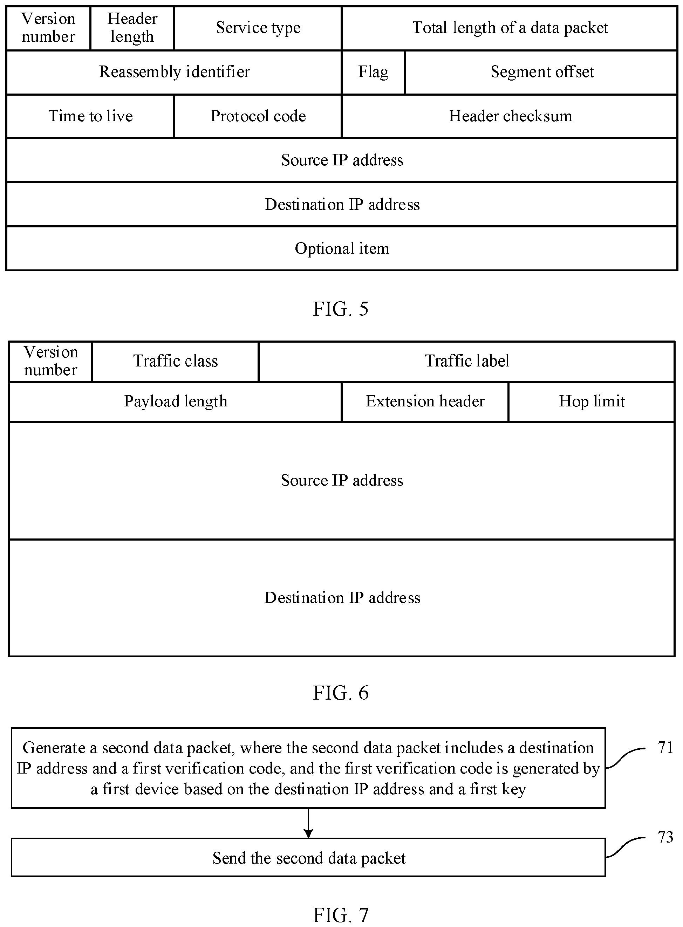

FIG. 5 is a schematic diagram of a structure of an IPv4 header. As shown in FIG. 5, the IPv4 header may sequentially include the following fields: a version number, a header length, a service type, a total length of a data packet, a reorganization identifier, a flag, a segment offset, time to live, a protocol code, a header checksum, a source IP address, a destination IP address, and an optional item. In a more specific example, the first verification code may be located in the optional item field of the IPv4 header.

FIG. 6 is a schematic diagram of a structure of an IPv6 header. As shown in FIG. 6, the IPv6 header sequentially includes the following fields: a version number, a traffic class, a traffic label, a payload length, an extension header, a hop limit, a source IP address, and a destination IP address. In a more specific example, the first verification code may be located in the extension header or the destination IP address of the IPv6 header.

In a possible implementation, a locator, a service identifier, and the first verification code included in the first data packet may be all located in a destination IP address of the first data packet, and the locator, the service identifier, and the first verification code form the destination IP address included in the first data packet. In this way, the network device only needs to extract a source IP address and a destination IP address from a network layer protocol header included in the second data packet, to quickly obtain parameters used to calculate the second verification code.

Then, in step 43, the first key is obtained.

In a possible implementation, the first data packet may further include the locator.

Correspondingly, in a more specific example, the network device may obtain the first key based on the locator included in the first data packet. As described above, the locator may be an IP address of the first device, or may be a part of an IP address of the first device. To be specific, the locator may be the destination IP address included in the first data packet, or may be a part of the destination IP address included in the first data packet.

In a more specific example, before the network device obtains the first key based on the locator, the network device may further receive first key allocation information including the locator and the first key. In this way, the network device may extract, based on the locator included in the first data packet, the first key from the first key allocation information including the locator.

Specifically, the first key allocation information may be from a key management center, from the first device, or from a security device in a server cluster in which the first device is located.

In a possible implementation, the first data packet further includes the service identifier.

Correspondingly, in another more specific example, before the network device obtains the first key based on the locator, the network device may further receive second key allocation information including the locator and a second key. In this way, the network device may extract, based on the locator included in the first data packet, the second key from the second key allocation information including the locator, and obtain the first key through calculation based on the second key and the service identifier.

Specifically, the second key allocation information may be from the key management center, from the first device, or from the security device in the server cluster in which the first device is located.

Further, in step 45, the second verification code is generated based on the source IP address and the first key.

It should be noted that the source IP address and the first key included in the first data packet are required parameters for generating the second verification code. In a specific service scenario, one or more optional parameters may be further used. In conclusion, an algorithm and a parameter used by the network device to generate the second verification code for one first data packet received by the network device are the same as an algorithm and a parameter used by the first device to generate the first verification code for the second device that sends the first data packet.

In a more specific example, when generating the second verification code, in addition to using the source IP address and the first key, the network device may further use any one or more of the locator, the service identifier, and a first dynamic parameter. It should be noted that the first dynamic parameter may be included in the first data packet. Alternatively, the first dynamic parameter may be a parameter obtained by the network device in real time, for example, a time parameter with specific precision.

Then, in step 47, if the second verification code is the same as the first verification code, it is determined that the first data packet is valid.

The algorithm and the parameter used by the network device to generate the second verification code for one first data packet received by the network device are the same as the algorithm and the parameter used by the first device to generate the first verification code for the second device that sends the first data packet. Therefore, if the first verification code included in the first data packet is the same as the second verification code generated by the network device, it indicates that the first data packet is the response data packet sent by the second device to respond to the second data packet from the first device, or the request data packet used by the second device to request the first device to provide the specific service to the second device, and the first data packet is not a data packet used to attack the first device.

On the contrary, if the second verification code is different from the first verification code, it indicates that the second device fails to exchange the data packet with the first device by using the correct first verification code, and the first data packet may be a service request sent by an intruder to the second device by using a controlled device, so that the second device sends, to the first device, the data packet used to attack the first device.

The data packet used to attack the first device is usually a response data packet. Therefore, in a possible implementation, before obtaining a corresponding first key for the first data packet received by the network device, the network device may further detect whether the first data packet received by the network device is a response data packet, and if the first data packet is not the response data packet, directly determine that the first data packet is valid. Alternatively, the network device may send a first data packet that is not the response data packet to another security device, for example, send the first data packet that is not the response data packet to a traffic cleaning center. The traffic cleaning center performs upper-layer protocol parsing and attack feature identification on the first data packet, to determine whether the first data packet is the data packet used to attack the first device.

The intruder may learn of, by listening to the data packet received by the second device from the first device, the first verification code that needs to be used when the second device and the first device exchange the data packet, to continuously send service requests to the second device within short time by using the correct first verification code and the IP address of the first device, so that the second device continuously sends a large number of response data packets with large traffic to the first device within the short time. The response data packets may be determined as valid data packets. If the response data packets are sent by the network device to the first device, a replay attack may be formed on the first device.

Therefore, in a possible implementation, when the first data packet received by the network device is the response data packet, the network device may determine, based on a source IP address included in each data packet received by the network device, a quantity of data packets that are received per unit time and that are from the second device corresponding to the source IP address included in the first data packet. When the quantity is not less than a first preset threshold, the source IP address included in the first data packet may be marked as an untrusted IP address.

In another possible implementation, when the first data packet received by the network device is the response data packet, the network device may determine, based on a source IP address included in each data packet received by the network device, a total data volume of data packets that are received per unit time and that are from the second device corresponding to the source IP address included in the first data packet. When the total data volume is not less than a second preset threshold, the source IP address included in the first data packet may be marked as an untrusted IP address.

Correspondingly, when the first data packet is determined as a valid data packet, the network device may further determine whether marked untrusted IP addresses include the source IP address included in the first data packet, and sends the first data packet based on the locator included in the first data packet only when the marked untrusted IP addresses do not include the source IP address included in the first data packet. This avoids sending a first data packet used to form a replay attack on the first device to the first device.

In another more specific example, when the source IP address included in the first data packet is marked as the untrusted IP address, even if the first data packet is determined as a valid data packet, the network device may discard the first data packet, or perform traffic limiting on each first data packet corresponding to the source IP address included in the first data packet.

In this embodiment of this application, if the second verification code is different from the first verification code, the network device may discard the first data packet, and a data packet that may be used to attack the first device does not reach the first device. The data packet used to attack the first device is blocked, to prevent the first device from being under a DDoS attack, especially a DRDoS attack.

In this embodiment of this application, if the first data packet is valid, the network device may further send the first data packet based on the locator included in the first data packet. The valid data packet is not discarded, which ensures service availability of the first device. In addition, because the network device can quickly determine validity of the first data packet, the valid data packet can quickly reach the first device, and a delay is very low.

In this embodiment of this application, a communication link between the first device and the second device does not need to be changed, an application layer protocol of a data packet does not need to be parsed based on different reflector types, and only a network device of an existing network needs to be improved to filter out the data packet used to attack the first device. This is more applicable.

It should be noted that, if an SSDP server sends, to the first device by using a multicast address, the data packet used to attack the first device, a service provided by the server may be disabled in a local area network to which the first device belongs, to prevent the server from sending, to the first device, the data packet used to attack the first device.

In a possible implementation, the network device may continuously perform, for each first device, the data processing process performed by the network device in the foregoing embodiments, or when receiving indication information sent by a first device or a security device in a server cluster in which the first device is located, for the specific first device corresponding to a locator included in the indication information, the network device may start to perform or stop performing the data processing process performed by the network device in the foregoing embodiments.

It should be noted that the security device in the server cluster in which the first device is located may monitor a status of each first device in the server cluster, so that when any first device in the server cluster is under the DDoS attack, a corresponding security measure is performed, for example, sending indication information to the network device, so that the network device performs the foregoing data processing process performed by the network device for the first device under the DDoS attack.

Correspondingly, an embodiment of this application provides a data processing method applied to a first device. As shown in FIG. 7, the method may include at least the following step 71 and step 73.

Step 71: Generate a second data packet, where the second data packet includes a destination IP address and a first verification code, and the first verification code is generated by the first device based on the destination IP address and a first key.

It may be understood that the destination IP address is an IP address of a second device that receives the second data packet.

In a possible implementation, the first key may be from a key management center.

In another possible implementation method, the first key may be obtained by the first device through calculation based on a second key and a service identifier. The second key is from the key management center, and the service identifier is from an identifier management center.

As described above, the destination IP address and the first key may be used as required parameters for generating the first verification code. In a process of generating the first verification code, one or more optional parameters may be further used. The optional parameter include but is not limited to a locator and a service identifier that are allocated by the identifier management center to the first device.

In a more specific example, the optional parameter may further include a second dynamic parameter, so that the first verification code used when the first device and the second device exchange a data packet dynamically changes. Therefore, an intruder is prevented from performing a DDoS attack on the first device after collecting a large number of first verification codes that need to be used by the second device serving as a reflector after long time.

In a specific example, the second dynamic parameter may be a time parameter, and precision of the time parameter may be adjusted, so that the first device generates different first verification codes for the second device in different time periods. In the different time periods, the different first verification codes are used as identifiers of data packets exchanged between the first device and the second device. The precision of the time parameter may be an empirical value, for example, 1 hour. In this way, in any two adjacent time periods whose time length is 1 hour, the first device and the second device exchange a data packet by using different first verification codes.

In another specific example, the second dynamic parameter may alternatively be a periodically generated random number, so that the first device generates different first verification codes for the second device in different time periods.

It may be understood that a type of the second dynamic parameter includes but is not limited to the time parameter and the random number.

In a specific example, the first device may generate the first verification code based on the first key, the destination IP address, the locator and the service identifier allocated by the identifier management center to the first device, and the second dynamic parameter by using a unidirectional security algorithm. The security algorithm may be a hashing algorithm using a symmetric encryption algorithm.

A structure of a second data packet sent by the first device to one second device should be the same as a structure of the first data packet sent by the second device to the first device. Therefore, parameters used by the first device to generate a second verification code for one second device should be able to be learned by a network device, so that the network device performs, based on the parameters used by the first device to generate the second verification code for the second device, accuracy verification on the first verification code included in the first data packet sent by the second device to the first device. Specifically, the parameter used by the first device to generate the first verification code for the second device may be included in the second data packet. For example, when the first device generates the first verification code, the locator and the service identifier allocated by the identifier management center to the first device are used. In this case, the locator and the service identifier may be included in the second data packet.

It should be noted that when the type of the second dynamic parameter is the time parameter, the second data may not include the second dynamic parameter. When the second dynamic parameter is the random number or another type of parameter, the second data packet should include the second dynamic parameter.

Step 73: Send the second data packet.

It may be understood that the network device is used as a node device on the communication link between the first device and the second device corresponding to the destination IP address included in the second data packet. The second data packet sent by the first device may first reach the network device, and the network device sends the second data packet to the second device corresponding to the destination IP address.

To enable the network device to learn of the first key used by the first device to generate the first verification code, in a possible implementation, the first device may further send first key allocation information to the network device, the key management center, or a security device in a server cluster in which the first device is located. The first key allocation information includes the locator of the first device and the first key.

When the first device uses the service identifier when generating the first verification code, in a possible implementation, the first key may be generated by the first device based on the service identifier and the second key from the key management center.

Correspondingly, the first device may further send second key allocation information to the network device, the key management center, or the security device in the server cluster in which the first device is located. The second key allocation information includes the locator of the first device and the first key.

In this embodiment of this application, when the first device is under the DDoS attack, the first device may further send, to the network device, indication information including the locator of the first device, to trigger the network device to perform, for the first device, the data processing process performed by the network device in the foregoing embodiments.

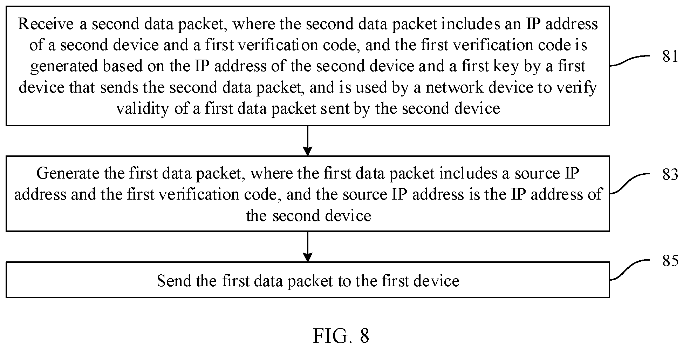

Based on a same idea as the foregoing embodiments, this application further provides a data processing method applied to a second device. As shown in FIG. 8, the method may include at least the following step 81 to step 85.

Step 81: Receive a second data packet, where the second data packet includes an IP address of the second device and a first verification code, and the first verification code is generated based on the IP address of the second device and a first key by a first device that sends the second data packet, and is used by a network device to verify validity of a first data packet sent by the second device.

Step 83: Generate the first data packet, where the first data packet includes a source IP address and the first verification code, and the source IP address is the IP address of the second device.

Step 85: Send the first data packet to the network device.

In this embodiment of this application, the first data packet generated by the second device and the second data packet correspondingly received by the second device should have a same structure, and the first data packet should have at least the first verification code included in the second data packet, so that the network device determines validity of the first data packet sent by the second device.

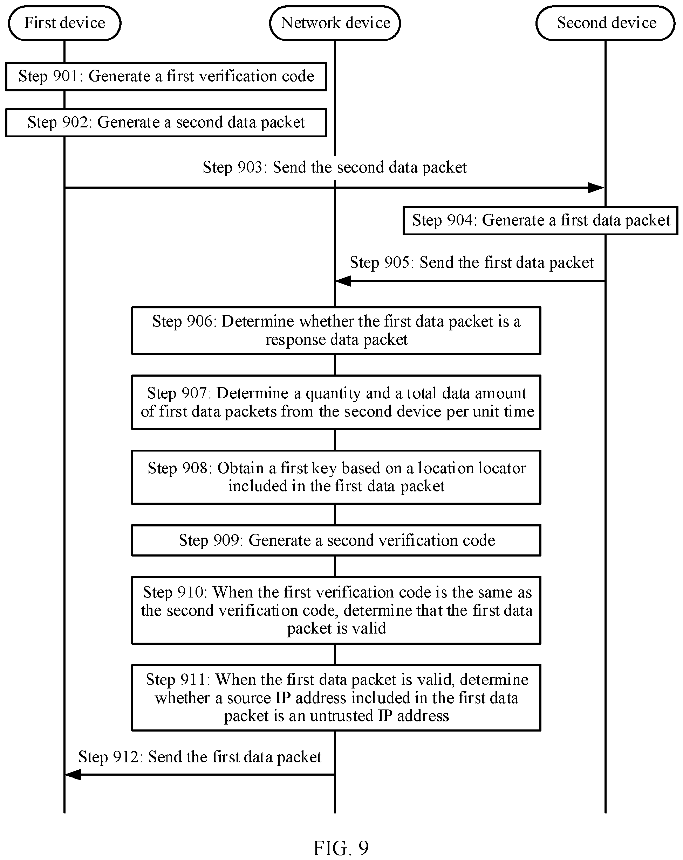

The following example describes a specific process in which the first device and the second device exchange a data packet by using the network device. As shown in FIG. 9, a specific process in which a first device and a second device exchange a data packet by using a network device may include the following step 901 to step 912. Step numbers are not used to limit a sequence of performing steps, and steps separately performed by the first device, the second device, and the network device are examples. In a process in which the first device and the second device exchange a data packet by using the network device, other steps may be further performed. Alternatively, each step may be split into a plurality of substeps.

Step 901: The first device generates a first verification code.

For example, the first device may generate the first verification code based on an IP address of the second device, a first key allocated by a key management center to the first device, a locator and a service identifier allocated by an identifier management center to the first device, and a timestamp with specific precision.

Step 902: The first device generates a second data packet.

A destination IP address included in the second data packet is the IP address of the second device. A source IP address included in the second data packet may include the locator, the service identifier, and the first verification code, or the source IP address included in the second data packet is the locator, and the first verification code and the locator are located in a network layer protocol header or a transport layer protocol header of the second data packet.

Step 903: The first device sends the second data packet to the second device.

It may be understood that the network device is used as a node device on a communication link between the first device and the second device. The second data packet may first reach the network device, and then the network device forwards the second data packet to the second device.

Step 904: The second device generates a first data packet.

If the first data packet generated by the second device is, a response data packet generated based on the second data packet sent by the first device to the second data packet, a source IP address included in the first data packet is the IP address of the second device, and the locator, the service identifier, and the first verification code included in the second data packet may be included in the first data packet.

The second device may buffer the locator, the service identifier, and the first verification code included in the first data packet sent by the first device to the second device. When the second device needs to actively send, to the first device, a request data packet used to request the first device to provide the second device with a specific service, the second device may generate the first data packet by using the locator, the service identifier, and the first verification code included in the second data packet buffered by the second device.

If the first data packet generated by the second device is a data packet that is generated based on a service request sent by a controlled device controlled by an intruder to the second device and that is used to attack the first device, because the intruder cannot correctly learn of the first verification code that needs to be used when the first device and the second device exchange a data packet, the first verification code included in the first data packet generated by the second device is different from the first verification code included in the first data packet. In other words, the first verification code included in the first data packet is different from a first verification code that is generated by the first device by using the IP address of the second device and another parameter and that is used by the first device and the second device to exchange a data packet.

Step 905: The second device sends the first data packet to the network device.

Step 906: The network device determines whether the first data packet is the response data packet.

The network device may distinguish a transport layer protocol and a port number of the first data packet, to identify whether the data packet is the response data packet. Alternatively, a packet type included in an application layer protocol of the first data packet may be identified, to determine whether the first data packet is the response data packet.

If the first data packet is not the response data packet, the network device may perform step 912.

If the first data packet is the response data packet, the network device may perform step 907.

Step 907: The network device determines a quantity and a total data volume of first data packets from the second device per unit time.

If the quantity is less than a first preset threshold and the total data volume is less than a second preset threshold, the network device may perform step 908.

If the quantity reaches the first preset threshold, or the total data volume reaches the second preset threshold, it indicates that the intruder may know the first verification code that needs to be used when the first device and the second device exchange a data packet. The intruder may trigger, by using the controlled device, the second device to continuously send a large number of response data packets and/or response data packets with a large total data volume to the first device within very short time, to form a replay attack on the first device. In this case, the network device may discard the first data packet or perform traffic limiting on each data packet from the second device, and mark the IP address of the second device included in the first data packet as an untrusted IP address.

Step 908: The network device obtains the first key based on the locator included in the first data packet.

It should be noted that, before step 908, the network device may receive first key allocation information including the locator of the first device and the first key. The network device may receive a plurality pieces of first key allocation information including different locators, and the network device may extract, based on a locator included in the first data packet, a corresponding first key from the first key allocation information including the locator.

Step 909: The first device generates a second verification code.

For example, the network device may generate the first verification code based on the first key obtained by the network device, the source IP address, the locator, and the service identifier that are included in the first data packet, and a corresponding timestamp with specific precision corresponding to the first data packet when the network device receives the first data packet.

Step 910: When the first verification code is the same as the second verification code, the network device determines that the first data packet is valid.

If the first verification code is different from the second verification code, it indicates that the first data packet may be a response data packet used to attack the first device, and the first data packet may be discarded.

Step 911: When the first data packet is valid, the network device determines whether the source IP address included in the first data packet is an untrusted IP address.

The network device may query whether marked untrusted IP addresses include the source IP address included in the first data packet. If the marked IP addresses include the source IP address included in the first data packet, it indicates that the second device corresponding to the source IP address included in the first data packet may have been controlled by the intruder, or the intruder has attempted to send, to the first device by using the second device corresponding to the source IP address included in the first data packet, the response data packet used to attack the first device, and the source IP address is untrusted. On the contrary, when determining that the source IP address included in the first data packet is trusted, the network device may perform the following step 912.

Step 912: The network device sends the first data packet.

The network device may send the first data packet to the first device based on the locator of the first device included in the first data packet.

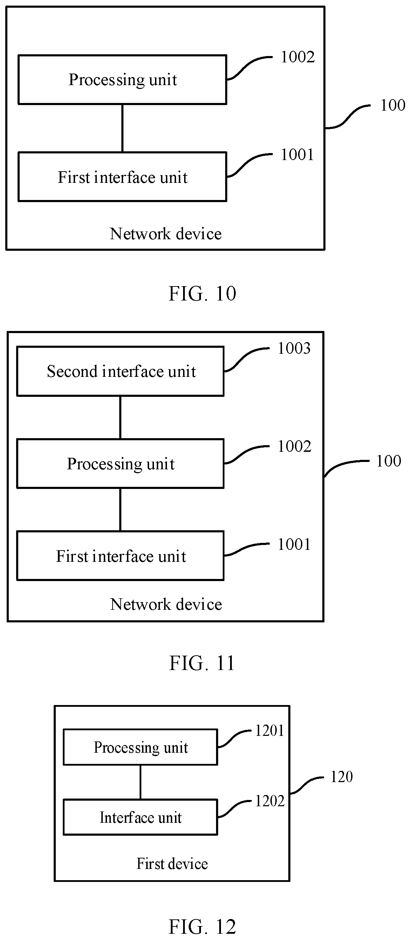

As shown in FIG. 10, an embodiment of this application provides a network device 100. The network device 100 includes:
a first interface unit 1001, configured to receive a first data packet, where the first data packet includes a source IP address and a first verification code; and
a processing unit 1002, configured to: obtain a first key; generate a second verification code based on the source IP address and the first key; and if the second verification code is the same as the first verification code, determine that the first data packet is valid.

As shown in FIG. 11, in a possible implementation, the network device 100 further includes a second interface unit 1003.

The first data packet further includes a locator of a first device.

The processing unit 1002 is further configured to trigger the second interface unit 1003 when the first data packet is valid.

The second interface unit 1003 is configured to send the first data packet to the first device based on the locator when being triggered by the processing unit 1002.

In a possible implementation, the first data packet further includes a service identifier.

In a possible implementation, the processing unit 1002 is specifically configured to generate the second verification code based on the source IP address, the first key, and any one or more of the locator, the service identifier, and a first dynamic parameter.

In a possible implementation, the first verification code is located in a network layer protocol header included in the first data packet.

In a possible implementation, the first verification code is located in a destination IP address included in the first data packet.

In a possible implementation, the first data packet further includes the locator and the service identifier, and the locator and the service identifier are located in the destination IP address.

In a possible implementation, the network layer protocol header includes an IPv6 header, and the first verification code is located in an extension header of the IPv6 header.

In a possible implementation, the first verification code is located in a transport layer protocol header included in the first data packet.

In a possible implementation, the transport layer protocol header includes a TCP header, and the first verification code is located in an optional field of the TCP header.

In a possible implementation, the first data packet further includes the locator.

The processing unit 1002 is specifically configured to obtain the first key based on the locator.

In a possible implementation,
the network device 100 further includes the second interface unit 1003, configured to receive first key allocation information, where the first key allocation information includes the locator and the first key.

The processing unit 1002 is specifically configured to extract the first key from the first key allocation information based on the locator.

In a possible implementation, the first data packet further includes the service identifier.

The network device 100 further includes the second interface unit 1003, configured to receive second key allocation information, where the second key allocation information includes the locator and a second key.

The processing unit 1002 is specifically configured to: extract the second key from the second key allocation information based on the locator; and calculate the first key based on the second key and the service identifier.

In a possible implementation, the processing unit 1002 is further configured to: detect whether the first data packet is a response data packet; and if the first data packet is the response data packet, determine whether the first data packet is a packet from a reflector.

In a possible implementation, the processing unit 1002 is further configured to: determine a quantity of data packets that are received per unit time and that are from a second device corresponding to the source IP address; and if the quantity is not less than a first preset threshold, mark the source IP address as an untrusted IP address.

In a possible implementation, the processing unit 1002 is further configured to: determine a total data volume of data packets that are received per unit time and that are from the second device corresponding to the source IP address; and if the total data volume is not less than a second preset threshold, mark the source IP address as an untrusted IP address.

In a possible implementation,
the processing unit 1002 is further configured to: determine whether marked untrusted addresses include the source IP address; and if the untrusted addresses do not include the source IP address, trigger the second interface unit.

As shown in FIG. 12, an embodiment of this application provides a first device 120. The first device 120 includes:
a processing unit 1201, configured to generate a second data packet, where the second data packet includes a destination IP address and a first verification code, and the first verification code is generated by the first device based on the destination IP address and a first key; and
an interface unit 1202, configured to send the second data packet.

In a possible implementation, the first verification code is generated by the processing unit 1201 based on the destination IP address, the first key, and any one or more of a locator, a service identifier, and a second dynamic parameter.

In a possible implementation, the first verification code is located in a network layer protocol header included in the second data packet.

In a possible implementation, the first verification code is located in a source IP address included in the second data packet.

In a possible implementation, the second data packet further includes the locator and the service identifier, and the locator and the service identifier are located in the source IP address.

In a possible implementation, the network layer protocol header includes an IPv6 header, and the first verification code is located in an extension header of the IPv6 header.

In a possible implementation, the first verification code is located in a transport layer protocol header included in the second data packet.

In a possible implementation, the transport layer protocol header includes a TCP header, and the first verification code is located in an optional field of the TCP header.

In a possible implementation, the second data packet further includes the locator.

The interface unit 1202 is further configured to send first key allocation information to a network device, where the first key allocation information includes the locator and the first key.

In a possible implementation, the second data packet further includes the service identifier.

The first key is generated by the processing unit 1201 based on the service identifier and a second key.

In a possible implementation,
the interface unit 1202 is further configured to send second key allocation information to the network device, where the second key allocation information includes the locator and the second key.

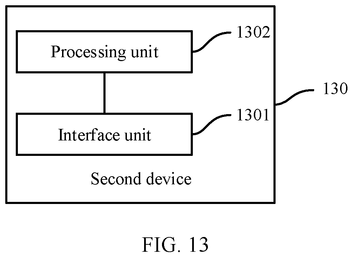

As shown in FIG. 13, an embodiment of this application provides a second device 130. The second device 130 includes:
an interface unit 1301, configured to receive a second data packet, where the second data packet includes an IP address of the second device and a first verification code, and the first verification code is generated by a first device that sends the second data packet based on the IP address of the second device and a first key, and is used by a network device to verify validity of a first data packet sent by the second device; and
a processing unit 1302, configured to generate the first data packet, where the first data packet includes a source IP address and the first verification code, and the source IP address is the IP address of the second device.

The interface unit 1301 is configured to send the first data packet to the network device.

In a possible implementation, the first verification code is located in a network layer protocol header or a transport layer protocol header included in the first data packet.

In a possible implementation, the first verification code is located in a destination IP address included in the first data packet.

In a possible implementation, the first data packet further includes a locator and a service identifier, and the locator and the service identifier are located in the destination IP address.

In a possible implementation, the network layer protocol header includes an IPv6 header, and the first verification code is located in an extension header of the IPv6 header.

An embodiment of this application provides a network device. The network device includes a transceiver, a memory, and a processor. The memory stores one or more programs, and the one or more programs include instructions. When the instructions are executed by the network device, the network device is enabled to perform the data processing method performed by the network device provided in any embodiment.

An embodiment of this application further provides a first device. The first device includes a transceiver, a memory, and a processor. The memory stores one or more programs, and the one or more programs include instructions. When the instructions are executed by the first device, the first device is enabled to perform the data processing method performed by the first device provided in any embodiment.

An embodiment of this application further provides a second device. The second device includes a transceiver, a memory, and a processor. The memory stores one or more programs, and the one or more programs include instructions. When the instructions are executed by the second device, the second device is enabled to perform the data processing method performed by the second device provided in any embodiment.

An embodiment of this application provides a computer-readable storage medium, configured to store instructions. When the instructions are executed, a data processing method performed by a network device is implemented.

An embodiment of this application provides a computer-readable storage medium, configured to store instructions. When the instructions are executed, a data processing method performed by a first device is implemented.

An embodiment of this application provides a computer-readable storage medium, configured to store instructions. When the instructions are executed, a data processing method performed by a second device is implemented.

An embodiment of this application provides a communication apparatus. The communication apparatus has functions of implementing the network device in any one of the embodiments of this application. The functions may be implemented by hardware, or may be implemented by hardware executing corresponding software. The hardware or the software includes one or more units corresponding to the foregoing function.

An embodiment of this application provides a communication apparatus. The communication apparatus has functions of implementing the first device in any one of the embodiments of this application. The functions may be implemented by hardware, or may be implemented by hardware executing corresponding software. The hardware or the software includes one or more units corresponding to the foregoing function.

An embodiment of this application provides a communication apparatus. The communication apparatus has functions of implementing the second device in any one of the embodiments of this application. The functions may be implemented by hardware, or may be implemented by hardware executing corresponding software. The hardware or the software includes one or more units corresponding to the foregoing function.

An embodiment of this application provides a communication apparatus. The communication apparatus may be the network device in any of the embodiments of this application, or may be a chip disposed in the network device. The communication apparatus includes a memory, a communication interface, and a processor. The memory is configured to store a computer program or instructions. The processor is coupled to the memory and the communication interface. When the processor executes the computer program or the instructions, the communication apparatus performs the method performed by the network device in any one of the embodiments of this application.

An embodiment of this application provides a communication apparatus. The communication apparatus may be the first device in any one of the embodiments of this application, or may be a chip disposed in the first device. The communication apparatus includes a memory, a communication interface, and a processor. The memory is configured to store a computer program or instructions. The processor is coupled to the memory and the communication interface. When the processor executes the computer program or the instructions, the communication apparatus performs the method performed by the first device in any one of the embodiments of this application.

An embodiment of this application provides a communication apparatus. The communication apparatus may be the second device in any one of the embodiments of this application, or may be a chip disposed in the second device. The communication apparatus includes a memory, a communication interface, and a processor. The memory is configured to store a computer program or instructions. The processor is coupled to the memory and the communication interface. When the processor executes the computer program or the instructions, the communication apparatus performs the method performed by the second device in any one of the embodiments of this application.

An embodiment of this application provides a computer program product. The computer program product includes computer program code, and when the computer program code is run on a computer, the computer performs the method performed by the network device, the method performed by the first device, or the method performed by the second device in any one of the embodiments of this application.

An embodiment of this application provides a chip system. The chip system includes a processor, configured to implement functions of the network device in the method provided in any one of the embodiments of this application, for example, receiving or processing data and/or information in the method performed by the network device. In a possible design, the chip system further includes a memory. The memory is configured to store program instructions and/or data. The chip system may include a chip, or may include a chip and another discrete device.

An embodiment of this application provides a chip system. The chip system includes a processor, configured to implement functions of the first device in the method provided in any one of the embodiments of this application, for example, receiving or processing data and/or information in the method performed by the first device. In a possible design, the chip system further includes a memory. The memory is configured to store program instructions and/or data. The chip system may include a chip, or may include a chip and another discrete device.

An embodiment of this application provides a chip system. The chip system includes a processor, configured to implement functions of the second device in the method provided in any one of the embodiments of this application, for example, receiving or processing data and/or information in the method performed by the second device. In a possible design, the chip system further includes a memory. The memory is configured to store program instructions and/or data. The chip system may include a chip, or may include a chip and another discrete device.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

It may be clearly understood by a person skilled in the art that, for convenience and brevity, for a specific working process of the foregoing network device, refer to a corresponding process in the foregoing method embodiments, and details are not described herein again.

It may be understood that the described apparatus embodiment is merely an example. For example, the division into units is merely logical function division and may be other division in actual implementation. For example, a plurality of units or parts may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Finally, it should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions provided in the foregoing embodiments or make equivalent replacements to some technical features thereof.

## Claims

1. A data processing method, applied to a network device, wherein the method comprises:
receiving (41) a first data packet, wherein the first data packet comprises a source internet protocol IP address and a first verification code;
obtaining (43) a first key;
generating (45) a second verification code based on the source IP address and the first key; and
if the second verification code is the same as the first verification code, determining (47) that the first data packet is valid,
wherein the generating a second verification code based on the source IP address and the first key comprises: generating the second verification code based on the source IP address, the first key, and any one or more of a locator, a service identifier, and a first dynamic parameter.

2. The method according to claim 1, wherein
the first data packet further comprises a locator of a first device; and
the method further comprises: if the first data packet is valid, sending the first data packet to the first device based on the locator.

3. The method according to claim 1, wherein the first verification code is located in a network layer protocol header comprised in the first data packet.

4. The method according to any of the claims 1 to 3, wherein the first verification code is located in a destination IP address comprised in the first data packet.

5. A data processing method, applied to a first device, wherein the method comprises:
generating (71) a second data packet, wherein the second data packet comprises a destination internet protocol IP address and a first verification code, and the first verification code is generated by the first device based on the destination IP address and a first key; and
sending (73) the second data packet,
wherein the first verification code is generated by the first device based on the destination IP address, the first key, and any one or more of a locator, a service identifier, and a second dynamic parameter.

6. The method according to claim 5, wherein the first verification code is located in a network layer protocol header comprised in the second data packet.

7. The method according to claim 6, wherein the first verification code is located in a source IP address comprised in the second data packet.

8. The method according to claim 7, wherein the second data packet further comprises a locator and a service identifier, and the locator and the service identifier are located in the source IP address.

9. A data processing method, applied to a second device, comprising:
receiving (81) a second data packet, wherein the second data packet comprises an internet protocol IP address of the second device and a first verification code, and the first verification code is generated based on the IP address of the second device, a first key, and any one or more of a locator, a service identifier, and a second dynamic parameter, by a first device that sends the second data packet, and is used by a network device to verify validity of a first data packet sent by the second device;
generating (83) the first data packet, wherein the first data packet comprises a source IP address and the first verification code, and the source IP address is the IP address of the second device; and
sending (85) the first data packet to the first device.

10. The method according to claim 9, wherein
the first verification code is located in a network layer protocol header or a transport layer protocol header comprised in the first data packet.

11. The method according to claim 10, wherein
the first data packet further comprises a locator and a service identifier; and
the locator, the service identifier, and the first verification code are located in a destination IP address comprised in the first data packet.

12. A network device (100), comprising:
a first interface unit (1001), configured to receive a first data packet, wherein the first data packet comprises a source internet protocol IP address and a first verification code; and
a processing unit (1002), configured to: obtain a first key; generate a second verification code based on the source IP address, the first key, and any one or more of a locator, a service identifier, and a first dynamic parameter; and if the second verification code is the same as the first verification code, determine that the first data packet is valid.

13. The network device (100) according to claim 12, wherein
the network device further comprises a second interface unit (1003);
the first data packet further comprises a locator of a first device;
the processing unit (1002) is further configured to trigger the second interface unit when the first data packet is valid; and
the second interface unit (1003) is configured to send the first data packet to the first device based on the locator when being triggered by the processing unit.

## Patentansprüche

1. Datenverarbeitungsverfahren, das auf einer Netzwerkvorrichtung angewendet wird, wobei das Verfahren Folgendes umfasst:
Empfangen (41) eines ersten Datenpakets, wobei das erste Datenpaket eine Quell-Internet Protocol-Adresse, Quell-IP-Adresse und einen ersten Bestätigungscode umfasst;
Erhalten (43) eines ersten Schlüssels;
Erzeugen (45) eines zweiten Verifizierungscodes auf der Grundlage der Quell-IP-Adresse und des ersten Schlüssels; und
wenn der zweite Verifizierungscode derselbe wie der erste Verifizierungscode ist, Bestimmen (47), dass das erste Datenpaket gültig ist,
wobei das Erzeugen eines zweiten Verifizierungscodes auf der Grundlage der Quell-IP-Adresse, des ersten Schlüssels Folgendes umfasst: Erzeugen des zweiten Verifizierungscodes auf der Grundlage der Quell-IP-Adresse, des ersten Schlüssels und einem oder mehrere eines Locators, eines Dienstidenifikators und eines erster dynamischem Parameters.

2. Verfahren nach Anspruch 1, wobei
das erste Datenpaket ferner einen Locator einer ersten Vorrichtung umfasst; und
das Verfahren ferner Folgendes umfasst: wenn das erste Datenpaket gültig ist, Senden des ersten Datenpakets an die erste Vorrichtung basierend auf dem Locator.

3. Verfahren nach Anspruch 1, wobei sich der erste Verifizierungscode in einem im ersten Datenpaket enthaltenen Netzwerkschichtprotokoll-Header befindet.

4. Verfahren nach einem der Ansprüche 1 bis 3, wobei sich der erste Bestätigungscode in einer Ziel-IP-Adresse befindet, die im ersten Datenpaket enthalten ist.

5. Datenverarbeitungsverfahren, das auf eine erste Vorrichtung angewendet wird, wobei das Verfahren Folgendes umfasst:
Erzeugen (71) eines zweiten Datenpakets, wobei das zweite Datenpaket eine Ziel-Internetprotokoll-IP-Adresse und einen ersten Verifizierungscode umfasst und der erste Verifizierungscode von der ersten Vorrichtung basierend auf der Ziel-IP-Adresse und einem ersten Schlüssel erzeugt wird; und
Senden (73) des zweiten Datenpakets,
wobei der erste Bestätigungscode von der ersten Vorrichtung basierend auf der Ziel-IP-Adresse, dem ersten Schlüssel, einem oder mehreren eines Locators, einer Dienstkennung und eines zweiten dynamischen Parameters.

6. Verfahren nach Anspruch 5, wobei sich der erste Verifizierungscode in einem im zweiten Datenpaket enthaltenen Netzwerkschichtprotokoll-Header befindet.

7. Verfahren nach Anspruch 6, wobei sich der erste Verifizierungscode in einer Quell-IP-Adresse befindet, die im zweiten Datenpaket enthalten ist.

8. Verfahren nach Anspruch 7, wobei das zweite Datenpaket ferner einen Locator und eine Dienstkennung umfasst und sich der Locator und die Dienstkennung in der Quell-IP-Adresse befinden.

9. Datenverarbeitungsverfahren, das auf eine zweite Vorrichtung angewendet wird, umfassend:
Empfangen (81) eines zweiten Datenpakets, wobei das zweite Datenpaket eine Internetprotokoll-IP-Adresse der zweiten Vorrichtung und einen ersten Prüfcode umfasst, und der erste Prüfcode auf der Grundlage der IP-Adresse der zweiten Vorrichtung, eines ersten Schlüssels und eines oder mehrerer eines Locators, einer Dienstkennung und eines zweiten dynamischen Parameters durch eine erste Vorrichtung, die das zweite Datenpaket sendet, und von einer Netzwerkvorrichtung verwendet wird, um die Gültigkeit eines von der zweiten Vorrichtung gesendeten ersten Datenpakets zu prüfen;
Erzeugen (83) des ersten Datenpakets, wobei das erste Datenpaket eine Quell-IP-Adresse und den ersten Verifizierungscode umfasst und die Quell-IP-Adresse die IP-Adresse der zweiten Vorrichtung ist; und
Senden (85) des ersten Datenpakets an die erste Vorrichtung.

10. Verfahren nach Anspruch 9, wobei
der erste Verifizierungscode sich in einem Netzwerkschichtprotokoll-Header oder einem Transportschichtprotokoll-Header befindet, der im ersten Datenpaket enthalten ist.

11. Verfahren nach Anspruch 10, wobei
das erste Datenpaket ferner einen Locator und eine Dienstkennung umfasst; und
der Locator, die Dienstkennung und der erste Bestätigungscode sich in einer Ziel-IP-Adresse befinden, die im ersten Datenpaket enthalten ist.

12. Netzwerkvorrichtung (100), umfassend:
eine erste Schnittstelleneinheit (1001), die dazu konfiguriert ist, ein erstes Datenpaket zu empfangen, wobei das erste Datenpaket eine Quell-Internet Protocol-Adresse, Quell-IP-Adresse und einen ersten Verifizierungscode umfasst; und
eine Verarbeitungseinheit (1002), die zum Erhalten eines ersten Schlüssels, zum Generieren eines zweiten Verifizierungscodes basierend auf der Quell-IP-Adresse, dem ersten Schlüssel und einem oder mehreren der folgenden Elemente konfiguriert ist: ein Locator, eine Dienstkennung und ein erster dynamischer Parameter, und, wenn der zweite Verifizierungscode mit dem ersten Verifizierungscode identisch ist, zum Bestimmen, dass das erste Datenpaket gültig ist.

13. Netzwerkvorrichtung (100) nach Anspruch 12, wobei die Netzwerkvorrichtung ferner eine zweite Schnittstelleneinheit (1003) umfasst;
das erste Datenpaket ferner einen Locator einer ersten Vorrichtung;
die Verarbeitungseinheit (1002) ferner so konfiguriert ist, dass sie die zweite Schnittstelleneinheit auslöst, wenn das erste Datenpaket gültig ist; und
die zweite Schnittstelleneinheit (1003) dazu konfiguriert ist, bei Auslösung durch die Verarbeitungseinheit das erste Datenpaket basierend auf dem Locator an die erste Vorrichtung zu senden.

## Revendications

1. Procédé de traitement de données, appliqué à un dispositif réseau, dans lequel le procédé comprend :
la réception (41) d'un premier paquet de données, dans lequel le premier paquet de données comprend une adresse de protocole Internet IP source et un premier code de vérification ;
l'obtention (43) d'une première clé ;
la génération (45) d'un second code de vérification sur la base de l'adresse IP source et de la première clé ; et
si le second code de vérification est le même que le premier code de vérification, la détermination (47) que le premier paquet de données est valide,
dans lequel la génération d'un second code de vérification sur la base de l'adresse IP source et de la première clé comprend :
la génération du second code de vérification sur la base de l'adresse IP source, de la première clé et d'un ou de plusieurs éléments parmi un localisateur, un identifiant de service et un premier paramètre dynamique.

2. Procédé selon la revendication 1, dans lequel
le premier paquet de données comprend également un localisateur d'un premier dispositif ; et
le procédé comprend également : si le premier paquet de données est valide, l'envoi du premier paquet de données au premier dispositif sur la base du localisateur.

3. Procédé selon la revendication 1, dans lequel le premier code de vérification est situé dans un en-tête de protocole de couche réseau compris dans le premier paquet de données.

4. Procédé selon l'une quelconque des revendications 1 à 3, dans lequel le premier code de vérification est situé dans une adresse IP de destination comprise dans le premier paquet de données.

5. Procédé de traitement de données, appliqué à un premier dispositif, dans lequel le procédé comprend :
la génération (71) d'un second paquet de données, dans lequel le second paquet de données comprend une adresse de protocole Internet IP de destination et un premier code de vérification, et le premier code de vérification est généré par le premier dispositif sur la base de l'adresse IP de destination et d'une première clé ; et
l'envoi (73) du second paquet de données,
dans lequel le premier code de vérification est généré par le premier dispositif sur la base de l'adresse IP de destination, de la première clé et d'un ou de plusieurs éléments parmi un localisateur, un identifiant de service et un second paramètre dynamique.

6. Procédé selon la revendication 5, dans lequel le premier code de vérification est situé dans un en-tête de protocole de couche réseau compris dans le second paquet de données.

7. Procédé selon la revendication 6, dans lequel le premier code de vérification est situé dans une adresse IP source comprise dans le second paquet de données.

8. Procédé selon la revendication 7, dans lequel le second paquet de données comprend également un localisateur et un identifiant de service, et le localisateur et l'identifiant de service sont situés dans l'adresse IP source.

9. Procédé de traitement de données, appliqué à un second dispositif, comprenant :
la réception (81) d'un second paquet de données, dans lequel le second paquet de données comprend une adresse de protocole Internet IP du second dispositif et un premier code de vérification, et le premier code de vérification est généré sur la base de l'adresse IP du second dispositif, d'une première clé et d'un ou de plusieurs éléments parmi un localisateur, un identifiant de service et un second paramètre dynamique, par un premier dispositif qui envoie le second paquet de données, et est utilisé par un dispositif réseau pour vérifier la validité d'un premier paquet de données envoyé par le second dispositif ;
la génération (83) du premier paquet de données, dans lequel le premier paquet de données comprend une adresse IP source et le premier code de vérification, et l'adresse IP source est l'adresse IP du second dispositif ; et
l'envoi (85) du premier paquet de données au premier dispositif.

10. Procédé selon la revendication 9, dans lequel
le premier code de vérification est situé dans un en-tête de protocole de couche réseau ou un en-tête de protocole de couche transport compris dans le premier paquet de données.

11. Procédé selon la revendication 10, dans lequel
le premier paquet de données comprend également un localisateur et un identifiant de service ; et
le localisateur, l'identifiant de service et le premier code de vérification sont situés dans une adresse IP de destination comprise dans le premier paquet de données.

12. Dispositif réseau (100), comprenant :
une première unité d'interface (1001), configurée pour recevoir un premier paquet de données, dans lequel le premier paquet de données comprend une adresse de protocole Internet IP source et un premier code de vérification ; et
une unité de traitement (1002), configurée pour : obtenir une première clé ; générer un second code de vérification sur la base de l'adresse IP source, de la première clé et d'un ou de plusieurs parmi un localisateur, un identifiant de service et un premier paramètre dynamique ; et si le second code de vérification est le même que le premier code de vérification, déterminer que le premier paquet de données est valide.

13. Dispositif réseau (100) selon la revendication 12, dans lequel
le dispositif réseau comprend également une seconde unité d'interface (1003) ;
le premier paquet de données comprend également un localisateur d'un premier dispositif ;
l'unité de traitement (1002) est également configurée pour déclencher la seconde unité d'interface lorsque le premier paquet de données est valide ; et
la seconde unité d'interface (1003) est configurée pour envoyer le premier paquet de données au premier dispositif sur la base du localisateur lorsqu'elle est déclenchée par l'unité de traitement.
